# EUROPÄISCHE PATENTSCHRIFT

(11) **EP 2 331 611 B1**
(45) Veröffentlichungstag und Bekanntmachung des Hinweises auf die Patenterteilung: **15.02.2012**
(21) Anmeldenummer: 09782513.7
(22) Anmeldetag: 02.09.2009
(51) Int. Cl.: C08J 5/18, C08J 5/00

(54) **VERFAHREN ZUR HERSTELLUNG FLÄCHIGER FORMKÖRPER ODER FOLIEN**
METHOD FOR MANUFACTURING FLAT MOLDED MEMBERS OR FILMS
PROCÉDÉ DE FABRICATION DE CORPS MOULÉS OU DE FILMS PLANS

(30) Priorität: 08.09.2008 EP 08163852
(43) Veröffentlichungstag der Anmeldung: 15.06.2011
(73) Patentinhaber: BASF SE, 67056 Ludwigshafen (DE)
(72) Erfinder: STEININGER, Helmut, 67551 Worms (DE); GIBON, Cecile, 68159 Mannheim (DE); WEBER, Martin, 67487 Maikammer (DE); BREINER, Thomas, 69514 Laudenbach (DE); HECKMANN, Walter, 69469 Weinheim (DE); GÖRTZ, Hans-Helmut, 67251 Freinsheim (DE)
(86) Internationale Anmeldenummer: PCT/EP2009/061344
(87) Internationale Veröffentlichungsnummer: WO 2010/026160

(56) Entgegenhaltungen:
- EP-A- 1 156 073
- EP-B- 0 598 836
- EP-B- 0 915 934
- WO-A-03/064503
- WO-A-2004/005376

## Beschreibung

Die Erfindung betrifft Verfahren zur Herstellung flächiger Formkörper mit anisotropen thermischen Ausdehnungskoeffizienten aus extrudierbaren thermoplastischen Polymerformmassen.

Bauteile aus thermoplastischen Kunststoffen haben gegenüber aus Metall gefertigten Teilen zahlreiche Vorteile, aber auch entscheidende Nachteile. Zu den Vorteilen zählen die geringe Dichte, die zu deutlicher Gewichtsersparnis führt; die rationelle Verarbeitbarkeit im Spritzguß, die ein hohes Maß an Flexibilität im Design zulässt; die inhärente Korrosionsfestigkeit, die eine spezielle Korrosionsschutzmaßnahme überflüssig macht, und die einfache Integration von Kunststoffbauteilen in Metallkonstruktionen. Auf der Seite der Nachteile stehen u. a. die geringe Dimensionsstabilität, die auf die oft hohe Wasseraufnahme, die geringe Wärmeformbeständigkeit (Temperaturabhängigkeit der Steifigkeit) und die hohen thermischen Ausdehnungskoeffizienten (CTE: Coefficient of Thermal Expansion) der Polymere zurückzuführen ist, und die daraus erwachsenden Fertigungsprobleme. Speziell im Automobilbau sind Karosserieanbauteile aus Kunststoff folglich bestenfalls nur inline und nicht, wie gewünscht, online zu verarbeiten, im Regelfall sogar nur offline, d.h. die Komponenten müssen am Ende der Lackierstraße assembliert werden. Damit verbunden sind neben Zusatzkosten auch Farbanpassungsprobleme.

Größenordnungsmäßig liegt der CTE der Metalle bei 10 *10⁻⁶ K⁻¹, der der Polymere unterhalb der Glasübergangstemperatur (T_{g}) bei 100 *10⁻⁶ K⁻¹, also um den Faktor 10 höher. Während der CTE der Metalle weitgehend temperaturunabhängig ist, nimmt der der Polymere beim Überschreiten der T_{g} noch um den Faktor zwei bis drei zu.

Die Verwendung plättchenförmiger anorganischer Füllstoffe, beispielsweise Schichtsilikate, als Füllstoff in Polymerformmassen ist bekannt.

Die WO 2006/029138 betrifft die Herstellung wasserlöslicher Polyamidzusammensetzungen, die zu Filmen und Folien weiterverarbeitet werden können. Dabei können Schichtsilikate mit verwendet werden. Zur Herstellung wird eine alkoholische Lösung des Polymers mit Schichtsilikaten vermischt und zu Filmen oder Folien vergossen. Die Folien können in der Verpackungsindustrie eingesetzt werden.

Die JP-A-57083551 betrifft Vermiculit-gefüllte Polyamidharzzusammensetzungen mit verbesserter Härte und Dehnung. Dazu wird Vermiculit mit einem Aspektverhältnis von > 5 in Nylon-66 eingebracht und spritzgegossen. Es wurden unterschiedliche thermische Ausdehnungskoeffizienten in Extrusionsrichtung und senkrecht dazu gemessen.

In Polymer 43 (2002), Seiten 6727 bis 6741 wird das thermische Expansionsverhalten von Nylon-6-Nanokompositen beschrieben. Dazu wurden Schichtsilikate in Nylon-6 eingearbeitet und die Formmassen extrudiert. Die Extrusion führte zu Formkörpern mit thermischen Ausdehnungskoeffizienten, die für die drei Raumrichtungen unterschiedlich waren. Hieraus wurde die nicht-statistische Orientierung der delaminierten Schichtsilikate abgeleitet.

EP-A-1 156 073 betrifft geformte Artikel aus einem Polyamidharz und die Herstellung davon. Es handelt sich dabei um Verpackungsmaterialien für Lebensmittel usw. Es wird auch auf vorteilhafte Eigenschaften wie die Gasbarriereeigenschaften gegen Sauerstoff und Kohlendioxid hingewiesen. Die Polyamidmassen enthalten ein Schichtsilikat als Füllstoff. Es handelt sich um spezielle MXD6-Polyamide, die einen verminderten Gehalt an gelartigen Teilchen aufweisen sollen. Es werden insbesondere nicht verstreckte Folien hergestellt, oder nicht verstreckte Formen. Zur Herstellung einer Flasche wird ein Dreischichtverbund biaxial blasgeformt. Dabei wird zunächst ein Dreischichtverbund gebildet, der durch das Blasformen biaxial verstreckt wird. Damit wird kein Stapel von zunächst extrudierten und verstreckten Formkörpern oder Folien hergestellt, die nachfolgend durch Fließpressverfahren oder durch Thermoformen zu Formkörpern weiterverarbeitet werden.

Die mit bisherigen Verfahren zufällig und damit undefiniert erhaltene Orientierung der Schichtsilikate und die damit verbundene Anisotropie des thermischen Ausdehnungskoeffizienten ist jedoch nicht ausreichend für Anwendungen, die einen in zwei Raumrichtungen reduzierten thermischen Ausdehnungskoeffizienten erfordern. Dies betraf insbesondere auch im Spritzguss hergestellte Produkte mit einer Wandstärke von weniger als 1 mm.

Die der Erfindung zugrunde liegende Aufgabe bestand darin, die thermische Ausdehnung, insbesondere auch oberhalb der Glasübergangstemperatur, polymerer Werkstoffe bzw. Formkörper erheblich abzusenken. Da flächig einzupassende, dreidimensionale Bauteile im Fokus des Interesses stehen, muss der CTE in zwei Dimensionen reduziert werden. Änderungen in der dritten Dimension, der Dicke des Bauteils, sind weniger oder nicht relevant. Die hierfür notwendigen Veränderungen am Werkstoff, dessen Blend- oder Compound-Zusammensetzung sollen vorzugsweise nicht mit einer Abnahme der Zähigkeit, also einer Versprödung des Materials, verbunden sein.

Die Aufgabe wird erfindungsgemäß gelöst durch ein Verfahren zur Herstellung flächiger Formkörper mit anisotropen thermischen Ausdehnungskoeffizienten aus extrudierbaren thermoplastischen Polymerformmassen durch Füllen der thermoplastischen Polymerformmassen mit plättchenförmigen Schichtsilikaten, die einen Durchmesser im Bereich von 10 bis 1000 nm und ein Aspektverhältnis im Bereich von 1 zu 5 bis 1 zu 10000 aufweisen, Extrusion der gefüllten thermoplastischen Polymerformmassen und nachfolgende uniaxiale oder biaxiale Verstreckung des Extrudats zu flächigen Formkörpern oder Folien, wobei die extrudierten und verstreckten Formkörper oder Folien zur Erhöhung der Schichtdicke in Stapeln aufeinander abgelegt, verpresst oder laminiert werden, und die Herstellung von Formkörpern nachfolgend durch Fließpressverfahren oder durch Thermoformen erfolgt.

Es wurde erfindungsgemäß gefunden, dass durch ein uniaxiales oder biaxiales Verstrecken des durch Scherung und Dehnung in der Extrusionsdüse bereits vororientierten Extrudats zu einem flächigen Formkörper oder einer Folie eine ausreichend hohe Orientierung der Schichtsilikate erreicht werden kann, so dass der thermische Ausdehnungskoeffizient in der Ebene der Fläche gering ist, während er senkrecht zur Fläche hoch ist. Hierdurch werden Formkörper zugänglich, in denen der CTE in zwei Dimensionen reduziert ist.

Grundsätzlich ausnutzen lässt sich dabei zur Reduzierung des CTE die gegenüber Polymeren geringe thermische Ausdehnung anorganischer Verbindungen. Werden diese Verbindungen als Pulver in ein Polymer homogen compoundiert, verringert sich der CTE einer Mischungsregel folgend linear und isotrop mit der Konzentration des Füllstoffes. Da der CTE der Füllstoffe bei etwa 10 *10⁻⁶ K⁻¹ liegt, sind nach bekannten Verfahren zur Erzielung nennenswerter Effekte sehr hohe Füllstoffkonzentrationen erforderlich, die sich negativ auf die mechanischen Eigenschaften, namentlich die Zähigkeit des Werkstoffs, auswirken. Überraschend zeigte sich, dass mit vorzugsweise sehr dünnen, plättchenförmigen, d.h. quasi zweidimensionalen Teilchen, bereits in geringen Konzentrationen eine große CTE-Reduktion erreicht werden konnte, wenn diese in der Polymermatrix möglichst homogen dispergiert und in einer Ebene möglichst gut orientiert vorliegen. Zusätzlich zeigten diese Materialien eine signifikante Erhöhung der Steifigkeit (E-Modul) und Wärmeformbeständigkeit aber kaum eine Abnahme der Zähigkeit. Als plättchenförmige Füllstoffe wurden bevorzugt organomodifizierte Montmorillonite (MMT) eingesetzt, die sich gut exfolieren und verteilen lassen.

Die uniaxiale oder biaxiale Verstreckung des Extrudats zu flächigen Formkörpern oder Folien kann durch beliebige geeignete Verfahren erreicht werden. Gemäß einer Ausführungsform der Erfindung erfolgt die Extrusion bevorzugt aus einer Breitschlitzdüse mit nachfolgender uniaxialer oder biaxialer Verstreckung der extrudierten Folie. Gemäß einer weiteren Ausführungsform der Erfindung erfolgt die Extrusion vorzugsweise aus einer Ringdüse mit nachfolgender biaxialer Verstreckung durch Blasen bzw. Blasformen. Entsprechende Verfahren bzw. entsprechende Düsengeometrien und Vorrichtungen sind dem Fachmann bekannt.

Zum Erhalt höherer Schichtdicken werden die extrudierten und verstreckten Formkörper oder Folien in Stapeln z. B. heiß aufeinander abgelegt, verpresst oder laminiert. Unter diesem Verfahrensschritt leiden weder die Verteilung noch die Orientierung des Füllstoffs. Auf den Laminierprozess kann verzichtet werden, wenn die schmelzflüssigen, in einem Koextrusionsprozess hergestellten Lagen aufeinander abgelegt werden. Es kann sich zur Kalibrierung der Schichtdicke eine Kalanderstufe oder zur Erhöhung der Orientierung die Behandlung in einem Streckrahmen anschließen.

Ein Vorteil der Folientechnologie liegt dabei in der Flexibilität der Materialkombination. Filme mit niedrigem CTE lassen sich kombinieren mit Filmen, deren funktionell Eigenschaften, beispielsweise Diffusionsbarriere, Zähigkeit, Flammschutz, Optik usw. für das Gesamtprodukt von Bedeutung sind.

Mindestens eine schichtsilikat-gefüllte Folie kann mit mindestens einer anderen thermoplastischen Kunststofffolie, die z. B. zur Eigenschaftsmodifikation, z. B. bezüglich der Diffusionssperre oder der Schlagzähigkeit, dient, zu einem Verbund kombiniert werden. Der Folienstapel kann durch Coextrusion hergestellt werden, wobei weitere Folienlagen oder Folienstapel durch Laminieren hinzugefügt werden können.

Aus den Formkörpern oder Folien werden nachfolgend durch Fließpressverfahren oder durch Thermoformen Formkörper hergestellt. Diese Formkörper werden insbesondere im Automobilbau eingesetzt. Hierbei kommen insbesondere Karosserie-Außenteile wie Kotflügel, Motorhauben, Türen und Heckklappen in Betracht, wie auch Innenausbauteile im Kraftfahrzeug.

Im Rahmen der vorliegenden Erfindung bedeutet der Ausdruck "flächiger Formkörper" einen Formkörper, der sich überwiegend in zwei Dimensionen und nur in geringem Umfang in eine dritte Dimension erstreckt. Beispielsweise können die Länge und Breite des Formkörpers jeweils mindestens 10x, bevorzugt mindestens 20x so groß sein wie die Dicke des Formkörpers.

Der Ausdruck "anisotrope thermische Ausdehnungskoeffizienten" bedeutet, dass ein Formkörper in mindestens einer der drei Raumrichtungen einen von den anderen Raumrichtungen abweichenden thermischen Ausdehnungskoeffizienten aufweist. Bevorzugte Formkörper gemäß der vorliegenden Erfindung weisen senkrecht zur Fläche einen erhöhten thermischen Ausdehnungskoeffizienten auf und innerhalb der Fläche einen gegenüber einem nicht gefüllten Polymer verminderten thermischen Ausdehnungskoeffizienten.

Der Ausdruck "plättchenförmig" bedeutet für die Schichtsilikate, dass sie bei einem Durchmesser im Bereich von 10 nm bis 1000 nm ein Aspektverhältnis im Bereich von 1 zu 5 bis 1 zu 10000 aufweisen.

Das im Verfahren nachfolgende uniaxiale oder biaxiale Verstrecken des Extrudats führt vorzugsweise zu einem Verstreckverhältnis im Bereich von 1 : 1 bis 1 : 20, besonders bevorzugt im Bereich von 1 : 2 bis 1 : 8.

Im erfindungsgemäßen Verfahren können beliebige geeignete plättchenförmige Schichtsilikate eingesetzt werden. Bevorzugte Schichtsilikate haben einen Durchmesser im Bereich von 15 nm bis 500 nm, insbesondere 20 nm bis 500 nm. Das Aspektverhältnis beträgt dabei vorzugsweise 1 zu 5 bis 1 zu 1000, insbesondere 1 zu 10 bis 1 zu 100. Die Schichtdicke beträgt vorzugsweise weniger als 50 nm, besonders bevorzugt weniger als 10 nm, insbesondere weniger als 2 nm.

Die Schichtsilikate können auf beliebigen Silikaten basieren, beispielsweise Montmorilloniten, Aluminium- oder Magnesiumsilikaten, Bentoniten, Vermiculiten usw. Weitere geeignete Schichtsilikate sind Hectorit, Saponit, Beidellit, Nontronit.

Geeignete Schichtsilikate sind in der eingangs aufgeführten Literatur beschrieben. Weitere geeignete Schichtsilikate sind in WO 2008/063198 und US 5,747,560 beschrieben.

Die Schichtsilikate können unbehandelt oder organomodifiziert sein. Bevorzugt werden organomodifizierte Schichtsilikate eingesetzt. Eine derartige Organomodifizierung ist beispielsweise in WO 2008/063198 beschrieben. Dazu werden die Schichtsilikate mit organischen Verbindungen umgesetzt, die eine Endgruppe aufweisen, die mit dem Polymer der thermoplastischen Formmasse kompatibel ist und zudem eine Ankergruppe zur Bindung an das Schichtsilikat.

Bevorzugt wird das Schichtsilikat modifiziert durch eine Kationenaustauschreaktion mit einem geeigneten organischen Salz wie einem quartären Ammonium-, hosphonium- oder Imidazoliumsalz. Vorzugsweise entsprechen geeignete quaternäre Ammoniumsalze der allgemeinen Formel R¹R²R³R⁴N⁺, worin R¹ bis R⁴ unabhängig voneinander lineare, verzweigte oder aromatische Kohlenwasserstoffreste bedeuten. Anstelle von Stickstoff kann auch Phosphor in den Kationen vorliegen. Geeignete Modifizierungen sind in WO 2008/063198 beschrieben.

Die Kohlenwasserstoffreste können ferner durch Hydroxylgruppen oder Säuregruppen modifiziert sein.

Beispielsweise kann ein quartäres Ammoniumgegenion eine Methylgruppe, zwei Hydroxymethylgruppen und eine von Talg abgeleitete Gruppe aufweisen (C₁₄₋₁₈-Rest).

Ferner können auch Aminosäuren in protonierter Form als Kationen eingesetzt werden, beispielsweise C₆₋₁₄-Aminosäuren. Geeignete Schichtsilikate sind beispielsweise von Rockwood Additives (Southern Clay Products) erhältlich. Zudem können beispielsweise Arginotech-Schichtsilikate von B+M Nottenkämper Gesellschaft für Bergbau und Mineralstoffe mbH und Co. KG eingesetzt werden.

Die Menge der Schichtsilikate kann nach den praktischen Erfordernissen eingestellt werden. Üblicherweise beträgt der Anteil in den thermoplastischen Polymerformmassen 0,1 Gew.-% bis 10 Gew.-%, bevorzugt 1 Gew.-% bis 5 Gew.-%, bezogen auf die gesamte Polymerformmasse.

Die Menge hängt vom Verteilungsgrad der Schichtsilikate in den Polymerformmassen ab. Wird das Schichtsilikat der fertigen Polymerformmasse beigefügt und beispielsweise in einem Extruder zugemischt, so wird die Menge höher gewählt werden müssen als beim Einmischen des Schichtsilikats in ein Monomerengemisch bereits bei der Herstellung des Polymeren.

Dies ist darauf zurückzuführen, dass beim Einarbeiten in einem Extruder, wie einem Zweischnecken-Extruder, keine so homogene Verteilung erreicht werden kann wie bei der in-situ-Polymerisation. Je besser die Verteilung und Exfolierung der Schichtsilikate ist, umso geringer kann die eingesetzte Menge sein.

Zudem ist es erfindungsgemäß möglich, der thermoplastischen Polymerformmasse zusätzliche weitere anorganische Füllstoffe zuzusetzen. Bei diesen Füllstoffen handelt es sich insbesondere um teilchenförmige Füllstoffe, insbesondere um Talkum. Die Menge der eingesetzten weiteren Füllstoffe liegt vorzugsweise im Bereich von 0,1 Gew.-% bis 10 Gew.-%, besonders bevorzugt 0,5 Gew.-% bis 5 Gew.-%.

Bevorzugt können bis zu 5 Gew.-%, bezogen auf die Polymerformmasse, an weiteren anorganischen Füllstoffen mit verwendet werden.

Die thermoplastische Polymerformmasse kann aus beliebigen geeigneten thermoplastischen Polymerformmassen ausgewählt werden. Vorzugsweise ist das zugrunde liegende thermoplastische Polymer ausgewählt aus Polyamiden, Polyoxymethylen, Polyalkylenterephthalat wie Polyethylenterephthalat oder Polybutylenterephthalat, Polysulfonen, Polyolefinen wie Polyethylen oder Polypropylen, Polystyrolen, Polyethern, Polyestern, Polymethyl(meth)acrylaten oder Copolymeren oder Gemischen davon, die zusätzlich Kautschuke enthalten können. Die Polymere können schlagzäh ausgerüstet sein. Besonders bevorzugt werden Polyamide und deren Blends mit PC, ABS, etc. eingesetzt.

Die Herstellung der thermoplastischen Polymere ist allgemein bekannt. Die Polymere können ferner weitere Inhaltsstoffe enthalten wie Licht- und Wärmestabilisatoren, Farbstoffe, Formtrennmittel, Flammschutzmittel usw.. Auch die Mitverwendung von faserförmigen Füllstoffen wie Glasfasern oder Kohlenstofffasern ist möglich.

Die Schmelzeviskositäten der bevorzugt eingesetzten thermoplastischen Polymere liegen bevorzugt im Bereich von 50 Pas bis 3500 Pas.

Bei der Herstellung erfolgt die Extrusion vorzugsweise bei Temperaturen im Bereich von 220 °C bis 280 °C. Bei der Verstreckung weisen die Polymerfolien oder Filme vorzugsweise noch eine Temperatur im Bereich von 70 °C bis 200 °C auf.

Die Erfindung betrifft auch Formkörper, die nach einem der vorstehend beschriebenen Verfahren erhältlich sind.

Bei Folien beträgt die Schichtdicke vorzugsweise 50 µm bis 300 µm. Für Laminate oder Formkörper, die aus mehreren Folien bestehen, beträgt die Dicke vorzugsweise 1 mm bis 4 mm.

Die erfindungsgemäßen Formkörper werden insbesondere im Automobilbau eingesetzt.

Die Erfindung wird durch die nachfolgenden Beispiele näher erläutert.

### Beispiele

Es wurden thermoplastische Formmassen auf Basis von Polyamid und organomodifizierten Montmorilloniten (MMT) eingesetzt.

### Homogene Verteilung

Zur homogenen Dispergierung der MMTs wurden zwei Wege beschritten. In einem thermoplastischen Polymer können die MMTs durch direkte Compoundierung im Zweischnecken-Extruder gut verteilt werden (z.B. PA6/MMT-1). Eine bessere Verteilung der MMTs und folglich in ihrer Wirkung auch effizientere Teilchen wurden in in-situ mit Caprolactam polymerisierten Produkten gefunden (z.B. PA6/MMT-2).

### Orientierung des Füllstoffs

In dünnwandigen, kleiner als 1 mm starken, im Spritzguss hergestellten Produkten erwies sich die Orientierung der MMTs als nicht ausreichend und nicht definiert einstellbar. Hingegen konnte die gewünschte planare Orientierung in Folien, die durch Extrusion aus einer Breitschlitzdüse und anschließende uniaxiale oder biaxiale Verstreckung hergestellt wurden, erzielt werden. Dies trifft auch auf Blasfolien zu, die verfahrensüblich durch Extrusion einer Schmelze aus einer Ringdüse und nachfolgende biaxiale Verstreckung (Blasen) hergestellt wurden. Die typische Stärke der Folien liegt unter 300 µm.

Da die Wandstärken realer Bauteile im Bereich einiger Millimeter liegen, werden einzelne Folienlagen in Stapeln heiß verpresst oder laminiert bzw. in einem Coextrusionsprozess hergestellt. Unter diesem Verfahrensschritt leidet weder die Verteilung noch die Orientierung des Füllstoffes. An den so hergestellten, aus fest verschweißten Folienstapeln bestehenden Halbzeugen wurden die in den Ausführungsbeispielen zitierten CTE-Messwerte ermittelt.

### Einsatzstoffe

### Komponente A

- A1:: Polyamid 6 mit einer Viskositätszahl VZ von 150 ml/g, gemessen als 0,5 gew.-%ige Lösung in 96 gew.-%iger Schwefelsäure bei 25 °C nach ISO 307
- A2:: Ein in-situ polymerisiertes Polyamid 6, das wie folgend hergestellt wird: (Herstellung der Komponente A in Gegenwart der Komponente B)

1 kg des Schichtsilikates B2 wird in 19 kg Caprolactam und 0,2 kg Wasser gelöst bzw. suspendiert. Nach Zugabe von 10 g Propionsäure und 5 l Wasser wird die Mischung in einem Rührkessel auf 270 °C erhitzt, wobei der Kesselinnendruck 17 bar beträgt.

Nach einer einstündigen Vorkondensation wird das Gefäß über einen Zeitraum von 2 Stunden entspannt und anschließend 1 Stunde nachkondensiert. Die Schmelze wird aus dem Kessel ausgetragen und granuliert. Das Granulat wird 24 Stunden mit heißem Wasser extrahiert, getrocknet und anschließend 22 Stunden bei 180 °C getempert.

Das Ausgangsmaterial weist folgende Eigenschaften auf:
VZ = 163 ml/g
AEG = 32 mmol/kg
CEG = 104 mmol/kg

### Komponente B

- B1:: Cloisite 30B^{®} (Southern Clay Products, Gonzales, TX, USA), mit quartärem Ammoniumsalz hydrophobiertes Phyllosilikat.
- B2:: SCPX 1304^{®} (Southern Clay Products, Gonzales, TX, USA), mit quarternärer C₁₂-Aminosäure hydrophobiertes Phyllosilikat.

### Komponente C

- C1:: Talkum IT Extra^{®} (Norwegian Talc, Bad Soden, DE)

### Komponente D

- D1:: Irganox 670^{®} (Ciba Specialty Chemicals, CH)

### Beispiel 1 (P1)

Komponente A1 wird in Kombination mit 5 Gew.-% der Komponente B1 verwendet. Komponente D1 wird in einer Konzentration von 0,2 Gew.-% zugegeben. Die Konfektionierung des PA6 Nanocomposite erfolgt mittels eines Zweischnecken-Extruders ZSK25 der Fa. Werner & Pfleiderer bei 250 °C. Dabei werden alle Komponenten vorgemischt und der Premix in den Einzug des Extruders gegeben. Das erhaltene Compound wird granuliert.

Folien werden durch Extrusion auf einer Blasfolienanlage (Fa. Weber) hergestellt. Der Schneckendurchmesser des Extruders beträgt 50 mm. Der Extruder wird bei 50 Upm mit einem Durchsatz von 5,4 kg/h, zwischen 240 °C (Zone 1) und 260 °C (Zone 3) betrieben.

Das Blasverhältnis beträgt 1 : 2 und die Abzugsgeschwindigkeit 4,8 m/min. Die erhaltene Folie hat eine Dicke von ca. 50 µm. Aus dieser Folie werden dicke Prüfkörper hergestellt. Mehrere Folien werden hierzu zu einer Gesamtdicke von 6 mm gestapelt und während 9 Minuten unter 3 bar bei 225 °C verpresst. Das erhaltene Produkt (P1 genannt) ist ca. 5 mm dick und wird für weitere Charakterisierungen verwendet.

### Beispiel 2 (P2)

Die Komponente A2 wird mit der Komponente A1 bis zu einer 2 gew.-%igen Konzentration der Komponente B2 verdünnt und weiter mit 2 Gew.-% der Komponente C1 und 0,2 Gew.-% der Komponente D1 gemischt. Die Konfektionierung des PA6-Nanocomposite erfolgt mittels eines Zweischnecken-Extruders ZSK 25 bei 250 °C. Dabei werden alle Komponenten vorgemischt und der Premix in den Einzug des Extruders gegeben. Das erhaltene Compound (P2 genannt) wird granuliert.

Folien werden durch Extrusion auf einer Blasfolienanlage (Fa. Weber) hergestellt. Der Schneckendurchmesser des Extruders beträgt 50 mm. Der Extruder wird bei 50 Upm mit einem Durchsatz von 5,4 kg/h, zwischen 240 °C (Zone 1) und 260 °C (Zone 3) betrieben. Das Blasverhältnis beträgt 1 : 2 und die Abzugsgeschwindigkeit 5 m/min. Die erhaltene Folie hat eine Dicke von ca. 50 µm. Aus dieser Folie wird ein dicker Teil hergestellt. Mehrere Folien werden zusammen zu einer Gesamtdicke von 6 mm gestapelt und während 9 Minuten unter 3 bar bei 225 °C verpresst. Das erhaltene Teil (P2 genannt) ist ca. 5 mm dick und wird für die weitere Charakterisierung verwendet.

### Beispiel 3 (P3)

Komponente A2 wird als reines Produkt verwendet. Folien werden durch Extrusion auf einer Flachfolienanlage (Fa. Weber, Model ZE30) hergestellt. Der Extruder wird bei 75 Upm und zwischen 230 °C (Temperatur des ersten Zylinders), 240 °C (Temperatur der Düse) und 250 °C (Mitte des Extruders) betrieben. Die Abzugsgeschwindigkeit beträgt 4,2 m/min. Die erhaltene Folie hat eine Dicke von ca. 200 µm. Aus dieser Folie werden dicke Prüfkörper hergestellt. Mehrere Folien werden hierzu zu einer Gesamtdicke von 6 mm gestapelt und während 9 Minuten unter 3 bar bei 225 °C verpresst. Das erhaltene Teil (P3 genannt) ist ca. 5 mm dick und wird für die weitere Charakterisierung verwendet.

### Vergleichsbeispiel 1 (P4)

Komponente A1 wird als reines Produkt verwendet. Folien werden durch Extrusion auf einer Flachfolienanlage (Fa. Weber, Model ZE30) hergestellt. Der Extruder wird bei 75 Upm und zwischen 230 °C (Temperatur des ersten Zylinders und der Düse) und 250 °C (Mitte des Extruders) betrieben. Die Abzugsgeschwindigkeit beträgt 4,2 m/min. Die erhaltene Folie hat eine Dicke von ca. 250 µm. Aus dieser Folie werden dicke Prüfkörper hergestellt. Mehrere Folien werden hierzu zu einer Gesamtdicke von 6 mm gestapelt und während 9 Minuten unter 3 bar bei 225 °C verpresst. Das erhaltene Teil (P4 genannt) ist ca. 5 mm dick und wird für die weitere Charakterisierung verwendet.

### Vergleichsbeispiel 2 (P5)

Die Komponente A1 wird in Kombination mit 5 Gew.-% der Komponente B1 verwendet. Die Komponente D1 wird in einer Konzentration von 0,2 Gew.-% zugegeben. Die Konfektionierung des PA6-Nanocomposite erfolgt mittels eines Zweischnecken-Extruders ZSK25 bei 250 °C. Dabei werden alle Komponenten als Premix vorgemischt und in den Einzug des Extruders gegeben. Das erhaltene Compound wird granuliert. Das getrocknete Granulat wird mit einer Massetemperatur von 260 °C in einer Spritzgussmaschine zu 60 mm x 10 mm x 0,8 mm Zugstäben verarbeitet, wobei die Werkzeugtemperatur 35 °C beträgt.

### Bestimmung des CTE (thermischer Ausdehnungs-Koeffizient)

Die CTEs werden in den drei Richtungen (Fließrichtung, Querrichtung und über der Dicke) in einem TMA-SS6000 Gerät der Firma Seiko bestimmt. Die Probenoberfläche wird zuerst abgeschliffen, um eine glatte Oberfläche zu erhalten. Die Probe wird in die Messzelle eingelegt und vor der Messung auf 140 °C erhitzt, um sicher zu stellen, dass die Probe trocken ist. Die anschließende Messung der CTEs wird jeweils mit einer Heizungsrate von 1 K/min unter einer Last von 20 mN im Temperaturbereich von -40 °C bis 120 °C durchgeführt.

Die Ergebnisse werden als Mittelwert angegeben, wenn sie sich auf einen Temperaturbereich beziehen. Zwei Temperaturbereiche werden unterschieden: für Temperaturen unterhalb T_{g} (- 40 °C bis ca. 40 °C) und für Temperaturen oberhalb T_{g} (ca. 40 °C bis 120 °C). Ferner wurde der CTE bei 120 °C bestimmt.

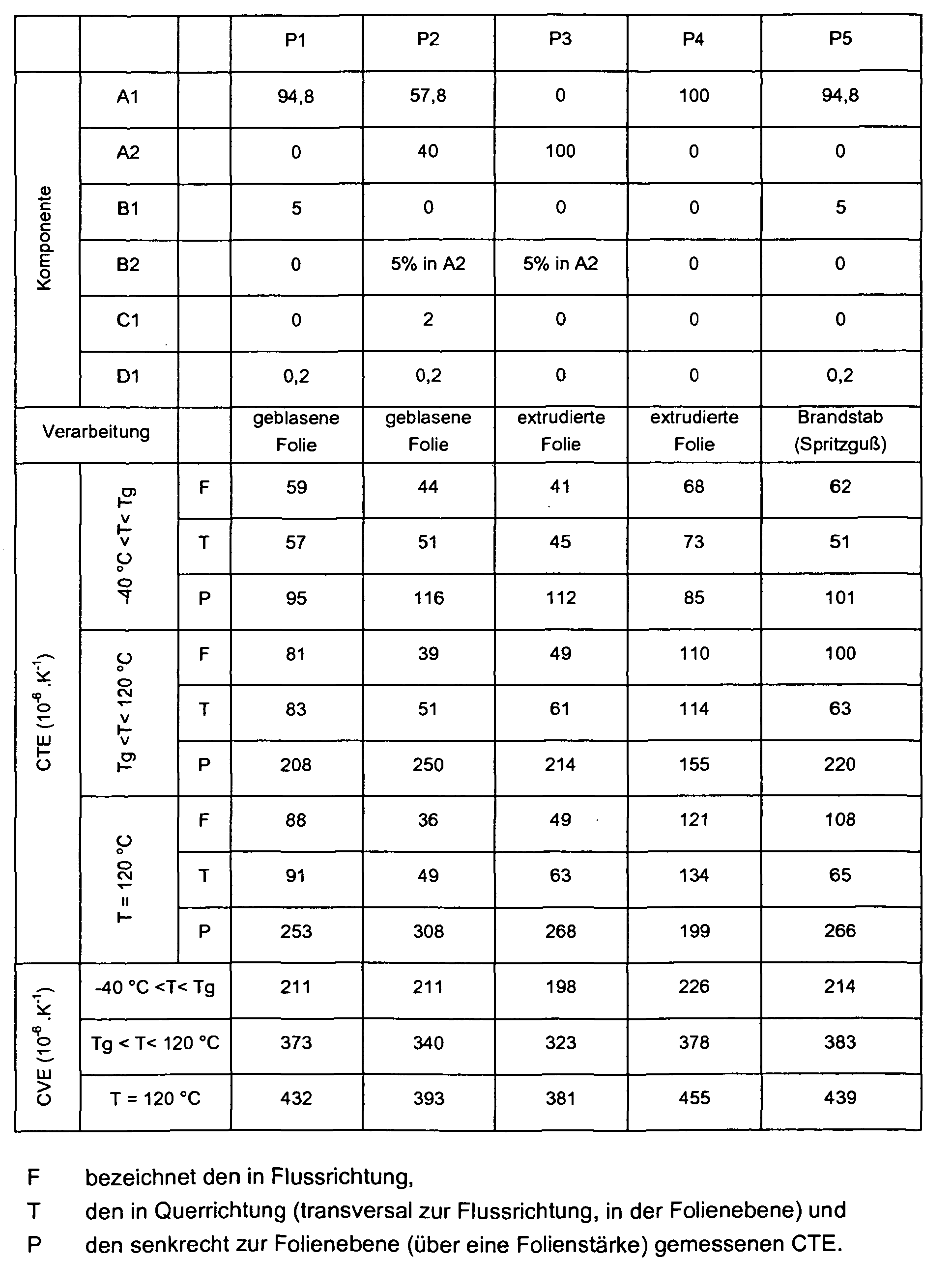

## Patentansprüche

1. Verfahren zur Herstellung flächiger Formkörper mit anisotropen thermischen Ausdehnungskoeffizienten aus extrudierbaren thermoplastischen Polymerformmassen durch Füllen der thermoplastischen Polymerformmassen mit plättchenförmigen Schichtsilikaten, die einen Durchmesser im Bereich von 10 bis 1000 nm und ein Aspektverhältnis im Bereich von 1 zu 5 bis 1 zu 10000 aufweisen, Extrusion der gefüllten thermoplastischen Polymerformmassen und nachfolgende uniaxiale oder biaxiale Verstreckung des Extrudats zu flächigen Formkörpern oder Folien, wobei die extrudierten und verstreckten Formkörper oder Folien zur Erhöhung der Schichtdicke in Stapeln aufeinander abgelegt, verpresst oder laminiert werden, und die Herstellung von Formkörpern nachfolgend durch Fließpressverfahren oder durch Thermoformen erfolgt.

2. Verfahren nach Anspruch 1, **dadurch gekennzeichnet, dass** die Extrusion aus einer Breitschlitzdüse mit nachfolgender uniaxialer oder biaxialer Verstreckung erfolgt.

3. Verfahren nach Anspruch 1, **dadurch gekennzeichnet, dass** die Extrusion aus einer Ringdüse mit nachfolgender biaxialer Verstreckung durch Blasen erfolgt.

4. Verfahren nach einem der Ansprüche 1 bis 3, **dadurch gekennzeichnet, dass** die plättchenförmigen Schichtsilikate organomodifiziert sind.

5. Verfahren nach einem der Ansprüche 1 bis 4, **dadurch gekennzeichnet, dass** das Füllen der thermoplastischen Polymerformmassen mit dem plättchenförmigen Schichtsilikat vor oder bei der Herstellung des Polymers aus Monomeren erfolgt.

6. Verfahren nach einem der Ansprüche 1 bis 5, **dadurch gekennzeichnet, dass** das thermoplastische Polymer der thermoplastischen Polymerformmasse ausgewählt ist aus Polyamiden, Polyoxymethylenen, Polyalkylenterephthalaten, Polysulfonen, Polyolefinen, Polystyrolen, Polyethern, Polyestern, Polymethyl(meth)acrylaten oder Copolymeren oder Gemischen davon, die zusätzlich Kautschuke enthalten können.

7. Verfahren nach einem der Ansprüche 1 bis 6, **dadurch gekennzeichnet, dass** die thermoplastischen Polymerformmassen zusätzlich weitere anorganische Füllstoffe enthalten.

8. Verfahren nach einem der Ansprüche 1 bis 7, **dadurch gekennzeichnet, dass** mindestens eine Schichtsilikat-gefüllte Folie mit mindestens einer anderen thermoplastischen Kunststofffolie zu einem Verbund kombiniert wird.

9. Verfahren nach einem der Ansprüche 1 bis 8, **dadurch gekennzeichnet, dass** ein Folienstapel durch Coextrusion hergestellt wird.

10. Verfahren nach Anspruch 8 oder 9, **dadurch gekennzeichnet, dass** zum Folienstapel weitere Folienlagen oder Folienstapel durch Laminieren hinzugefügt werden.

11. Formkörper, erhältlich nach einem Verfahren gemäß einem der Ansprüche 1 bis 10.

12. Verwendung von Formkörpern gemäß Anspruch 11 im Automobilbau.

## Claims

1. A process for the production of sheet-like moldings with anisotropic coefficients of thermal expansion, composed of extrudable thermoplastic polymer molding compositions, by filling the thermoplastic polymer molding compositions with lamellar phyllosilicates whose diameter is in the range from 10 to 1000 nm and whose aspect ratio is in the range from 1:5 to 1:10 000, extruding the filled thermoplastic polymer molding compositions, and then monoaxially or biaxially orienting the extrudate to give sheet-like moldings or foils, where the extruded and oriented moldings or foils are stacked or laminated, in order to increase layer thickness, and moldings are subsequently produced via flow molding processes or via thermoforming.

2. The process according to claim 1, wherein the extrusion takes place from a slot die with subsequent monoaxial or biaxial orientation.

3. The process according to claim 1, wherein the extrusion takes place from an annular die with subsequent biaxial orientation, via blowing.

4. The process according to any of claims 1 to 3, wherein the lamellar phyllosilicates have been organomodified.

5. The process according to any of claims 1 to 4, wherein the thermoplastic polymer molding compositions are filled with the lamellar phyllosilicate prior to or during the production of the polymer from monomers.

6. The process according to any of claims 1 to 5, wherein the thermoplastic polymer of the thermoplastic polymer molding composition has been selected from polyamides, polyoxymethylenes, polyalkylene terephthalates, polysulfones, polyolefins, polystyrenes, polyethers, polyesters, or polymethyl (meth)acrylates, or from copolymers, or from mixtures of these, which can also comprise rubbers.

7. The process according to any of claims 1 to 6, wherein the thermoplastic polymer molding compositions also comprise further inorganic fillers.

8. The process according to any of claims 1 to 7, wherein at least one phyllosilicate-filled foil is combined with at least one other thermoplastic foil to give a composite.

9. The process according to any of claims 1 to 8, wherein a foil stack is produced via coextrusion.

10. The process according to claim 8 or 9, wherein further foil sublayers or foil stacks are added via lamination to the foil stack.

11. A molding, obtainable by a process according to any of claims 1 to 10.

12. The use of moldings according to claim 11 in automobile construction.

## Revendications

1. Procédé de fabrication de corps moulés plats ayant des coefficients de dilatation thermique anisotropes à partir de matériaux de moulage polymères thermoplastiques extrudables par remplissage des matériaux de moulage polymères thermoplastiques avec des phyllosilicates en forme de plaquettes, qui présentent un diamètre dans la plage allant de 10 à 1 000 nm et un rapport de longueur dans la plage allant de 1 sur 5 à 1 sur 10 000, extrusion des matériaux de moulage polymères thermoplastiques remplis et étirage uniaxial ou biaxial ultérieur de l'extrudat pour former des films ou des corps moulés plats, les films ou corps moulés extrudés et étirés étant déposés en piles les uns sur les autres pour augmenter l'épaisseur de couche, comprimés ou laminés, et la fabrication de corps moulés ayant ensuite lieu par des procédés d'extrusion ou par thermoformage.

2. Procédé selon la revendication 1, **caractérisé en ce que** l'extrusion a lieu à partir d'une buse à fente large avec étirage uniaxial ou biaxial ultérieur.

3. Procédé selon la revendication 1, **caractérisé en ce que** l'extrusion a lieu à partir d'une buse annulaire avec étirage biaxial ultérieur par soufflage.

4. Procédé selon l'une quelconque des revendications 1 à 3, **caractérisé en ce que** les phyllosilicates en forme de plaquettes sont modifiés organiquement.

5. Procédé selon l'une quelconque des revendications 1 à 4, **caractérisé en ce que** le remplissage des matériaux de moulage polymères thermoplastiques avec le phyllosilicate en forme de plaquettes a lieu avant ou pendant la fabrication du polymère à partir de monomères.

6. Procédé selon l'une quelconque des revendications 1 à 5, **caractérisé en ce que** le polymère thermoplastique du matériau de moulage polymère thermoplastique est choisi parmi les polyamides, les polyoxyméthylènes, les polyalkylène téréphtalates, les polysulfones, les polyoléfines, les polystyrènes, les polyéthers, les polyesters, les poly(méth)acrylates de méthyle ou leurs copolymères ou mélanges, qui peuvent également contenir des caoutchoucs.

7. Procédé selon l'une quelconque des revendications 1 à 6, **caractérisé en ce que** les matériaux de moulage polymères thermoplastiques contiennent également des charges inorganiques supplémentaires.

8. Procédé selon l'une quelconque des revendications 1 à 7, **caractérisé en ce qu'**au moins un film rempli de phyllosilicate est combiné avec au moins un autre film plastique thermoplastique pour former un composite.

9. Procédé selon l'une quelconque des revendications 1 à 8, **caractérisé en ce qu'**une pile de films est fabriquée par coextrusion.

10. Procédé selon la revendication 8 ou 9, **caractérisé en ce que** des couches de film ou piles de films supplémentaires sont ajoutées à la pile de films par laminage.

11. Corps moulé, pouvant être obtenu par un procédé selon l'une quelconque des revendications 1 à 10.

12. Utilisation de corps moulés selon la revendication 11 dans la construction automobile.
